# EUROPEAN PATENT APPLICATION

(11) **EP 4 838 338 A1**
(43) Date of publication of application: **11.11.2026**
(21) Application number: 25175092.3
(22) Date of filing: 08.05.2025
(51) Int. Cl.: G06F 3/01, B60K 35/10, B60K 35/22, B60K 35/50, B60K 35/60, B60K 35/81, B60R 11/00

(54) **METHOD AND SYSTEM FOR MOVING A DISPLAY UNIT IN A VEHICLE**

(71) Applicant: Bayerische Motoren Werke Aktiengesellschaft, 80809 München (DE)
(72) Inventor: Zaki, Tarek, 80805 München (DE)

(57) **Abstract**

In a first aspect a method for moving a display unit (102) in a vehicle is provided. The method comprises determining a motion of the display unit (102) by means of at least one inertial sensor (204). The method further comprises comparing the determined motion of the display unit (102) to at least one gesture motion and directing a movement unit (104) to move the display unit (102), when the determined motion of the display unit (102) matches the at least one gesture motion. In a further aspect a corresponding system is provided.

## Description

The invention relates to a method for moving a display unit in a vehicle. The method includes comparing a determined motion of the display unit to at least one gesture motion. A corresponding system for moving a display unit in a vehicle is also disclosed.

Vehicles may regularly comprise displays, for example to visualise information relating to the vehicle or other content relevant to passengers of the vehicle. In case the content is only relevant for a selection of the passengers of the vehicle, it may be desirable to move the display into a position such that the selection of passengers may comfortably view the display. Such a movement may be motorised for comfortable actuation of the movement. To control the movement of the display, a software user interface may be provided on the display itself, or a hardware user interface may be provided. Each of these user interfaces may have a plurality of buttons that are mapped to move the display in a particular direction.

Such user interfaces may undesirably overlay content shown on the display and therefore interrupt the viewing experience. This is especially the case for a vehicle interior, where a size of the display may be limited. Similarly, hardware buttons may be undesirable in a vehicle interior of limited size.

It is an object to provide a method and a system for moving a display unit in a vehicle that is both reliable and compact.

The aforementioned object is achieved by the subject-matter of the independent claims. Advantageous embodiments are defined in the dependent claims and the following description.

In a first aspect a method for moving a display unit in a vehicle is provided. The method comprises determining a motion of the display unit by means of at least one inertial sensor. The method further comprises comparing the determined motion of the display unit to at least one gesture motion and directing a movement unit to move the display unit, when or if the determined motion of the display unit matches the at least one gesture motion.

The method enables moving of the display unit without requiring a dedicated or visible user interface. In particular, no visible software or hardware user interface is required when the method is carried out routinely. Rather, the display unit may be intuitively caused to move by a user, by providing tap gestures corresponding to the gesture motion. Thus, the determined motion may in particular be caused by an intentional tapping of the display unit by the user. The gesture motion corresponds to a predetermined motion that is caused by a known tap gesture, in particular the intentional tapping of the display unit.

In particular, the movement unit is configured to (mechanically) move the display unit. For example, the movement unit may move the display unit into different orientations or into different positions in the vehicle. This may include a linear and a rotational movement of the display unit. The movement unit may comprise a motor to move the display unit. Thus, the movement may be a motorised movement.

The display unit may, in particular, comprise an electronic display configured to display information or other visual content. For example, the information may relate to the vehicle. The visual content may relate to entertainment. Thus, the display unit may be part of an entertainment system of the vehicle or the vehicle cabin, in particular a rear-seat entertainment system.

In the step of determining the motion of the display unit, the motion may be determined periodically or continuously, for example. In particular, when determining the motion of the display unit, the motion of the display unit is determined in more than one direction. For example, the motion may be determined in six degrees of freedom. Thus, the motion may be determined along up to three perpendicular axes (e.g. surge, heave, sway) and/or around up to these three perpendicular axes (e.g. yaw, pitch, roll).

In particular, when determining the motion of the display unit, at least one motion parameter may be determined. For example, at least one (linear) acceleration along one of the up to three perpendicular axes may be determined and/or at least one angular velocity or acceleration around one of the three perpendicular axes may be determined.

The at least one inertial sensor may comprise at least one of an accelerometer and a gyroscope, for example. The at least one inertial sensor may preferably be comprised by the display unit.

Similar to the determined motion of the display unit, the at least one gesture motion may be at least one gesture motion parameter. In particular, the gesture motion may be a motion the display unit performs when the display unit is tapped with a particular gesture or pattern.

Thus, the gesture motion may be a motion of the display unit over time as it is caused by the particular gesture. In particular, when comparing the determined motion of the display unit to the at least one gesture motion, the period of time of the gesture motion may be taken into account. For example, the determined motion may be continuously determined over a similar time period or time frame as the duration of the gesture motion.

In particular, when tapping the display unit, no touchscreen or otherwise touch sensitive button is tapped or triggered. Rather, the tapping is registered as the motion of the entire display unit. Thus, the determined motion is not a touch input on a touchscreen of the display unit. In particular, the determined motion results from tapping a part of the display unit that is not a display configured to visualise content.

The determined motion may match the at least one gesture motion, when both motions are identical, for example. However, the determined motion may also be matched to the at least one gesture motion based on a measure of similarity or a measure of deviation. For example, the matching may take into account a probability distribution and a predetermined measure of deviation. Thus, in case the determined motion is found to be sufficiently similar to the at least one gesture motion, they may be matched and the movement unit may be directed to move the display unit. In other cases, the determined motion and the at least one gesture motion may not be matched and the movement unit may not be directed to move the display unit.

In an embodiment of the method, the display unit is moveable along a plurality of directions by means of the movement unit. This enables a flexible positioning of the display unit in the vehicle. For example, the movement unit may be configured to move the display unit in a linear movement and/or a rotary movement. In a particular example, the movement unit may be configured to move the display unit in a direction along a longitudinal axis of the vehicle and/or along a lateral axis of the vehicle. The longitudinal axis of the vehicle may be perpendicular to at least one row of seats or a seat bench of the vehicle, in particular the longitudinal axis may be arranged between a front and a rear of the vehicle. The lateral axis of the vehicle may be parallel to the at least one row of seats of the vehicle, in particular the lateral axis may be arranged between a left and a right side of the vehicle. Thus, in a specific example, the display unit may be movable from a viewing position for a left back seat to a viewing position for a right back seat and/or from a front seat viewing position to a back seat viewing position.

In an embodiment, the determined motion of the display unit is compared to a set of gesture motions and the movement unit is directed to move the display unit, when the determined motion matches one of the gesture motions of the set of gesture motions. This enables flexibly directing the movement of the display unit in the vehicle. In particular, the set of gesture motions may comprise at least the at least one gesture motion.

In an embodiment, the movement unit is directed to move the display unit into a particular one of the directions of the plurality of directions, when the determined motion of the display unit matches a corresponding one of the gesture motions of the set of gesture motions. This enables easily and specifically directing the display unit into a particular one of the directions. In particular, each of the gesture motions of the set of gesture motions may correspond to a particular direction of the plurality of directions the display unit is moveable in. In turn, when a determined motion is matched to a particular gesture motion, the display unit is moved into the direction corresponding to that particular gesture motion.

In an embodiment, the display unit may be directed to visualise the particular direction that the movement unit is directed to move the display unit into. For example, the display unit may display an animation in the particular direction that the movement unit is directed to move the display unit into. This enables giving feedback or an acknowledgment to a user upon their successful tap gesture interaction with the display unit.

In an embodiment the movement unit is directed to move the display unit for a predetermined distance, when the determined motion of the display unit matches a corresponding one of the gesture motions of the set of gesture motions. This enables precisely directing the movement of the display unit. In particular, the display unit may be directed to for the predetermined distance in a particular one of the directions. In addition, there may be several different predetermined distances and the display unit may be directed to move at a particular one of the different predetermined distances based on matching the determined motion with a corresponding gesture motion. Similarly, the display unit may be directed to move at a predetermined speed based on matching the determined motion with a corresponding gesture motion.

Thus, the display unit may be moved between a first position in the vehicle and a second position in the vehicle, the second position being different from the first position based on matching the determined motion to one of the gesture motions corresponding to the first position or to another one of the gesture motions corresponding to the second position.

In an embodiment, the gesture motions of the set of gesture motions are distinguishable from each other. This enables precisely directing the movement of the display unit in the vehicle based on the set of gesture motions. In particular, each gesture motion of the set of gesture motions is unique. For example, each gesture motion is a distinguishable or unique pattern of motions of the display unit, with each pattern corresponding to a particular tap gesture a user may perform on the display unit.

In an embodiment, the at least one gesture motion comprises an acceleration pattern or a pattern of accelerations, in particular over a specific time frame. This enables efficiently distinguishing the gestures motions of the set of gesture motions. For example, each pattern may comprise a different set of accelerations of the display unit in response to the particular tap gesture.

In an embodiment, the at least one gesture motion corresponds to a motion of the display unit when tapped at a specified part of the display unit. The gesture motions may be distinguishable from each other in that they correspond to tapping the display unit at different specified parts.

In particular, the movement unit may be directed to move the display unit into a particular one of the directions of the plurality of directions, when the determined motion of the display unit matches a corresponding one of the gesture motions, wherein the one gesture motion corresponds to the motion of the display unit when tapped at the specified part of the display unit. In particular, the tapped specified part of the display unit may be oriented on the display unit in the particular direction, into which the movement unit is directed to move the display unit. In particular, the specified part of display unit is not a display configured to visualise content.

In a specific example, the determined motion of the display unit may be due to tapping the display unit on a left side. This determined motion may be compared and matched to a gesture motion resulting from tapping the display unit on the left side. As a result of the matching, the movement unit may be directed to move the display unit in a direction to the left of the display unit.

In an embodiment, the motion of the display unit is determined by means of a plurality of accelerometers. This enables robustly determining the motion of the display unit.

In an embodiment a motion of the vehicle is determined when the motion of the display unit is determined. The determined motion of the display unit may be corrected based on the determined motion of the vehicle to generate a corrected determined motion of the display unit. The corrected determined motion of the display unit may subsequently be compared to the at least one gesture motion. This enables accurately determining the motion of the display. In particular, a motion of the display unit that is due to the motion of the vehicle may be compensated. Thus, a motion of the display unit not caused by an intentional gesture of a user may be at least partially compensated. To that end, the vehicle may comprise at least one further inertial sensor configured to determine the motion of the vehicle, in particular, the further inertial sensor is not arranged in the display unit.

In another aspect, a system for moving a display unit in a vehicle is provided. The system comprises means configured to carry out the method for moving a display unit in a vehicle.

The system may comprise a control unit configured to direct the means of the system to carry out the method. Such a control unit may comprise an integrated circuit, such as a field programmable gate array, for example.

In an embodiment the system comprises a display unit comprising at least one accelerometer configured to determine a motion of the display unit. The system may further comprise a movement unit configured to move the display unit based on the determined motion of the display unit. In particular, the movement unit may physically move the display unit into different orientations.

The system has the same advantages as the method for moving a display unit in a vehicle. Further, the system may be supplemented with the features of the method described in this document, in particular, the features of the dependent claims of the method.

Hereinafter, specific embodiments are described referring to the drawings, wherein:
- Figure 1: is a perspective view of a vehicle interior with a display unit and a movement unit,
- Figure 2: is a schematic view of the display unit,
- Figure 3: is a schematic view of an acceleration pattern of a tap gesture motion, and
- Figure 4: is a flow diagram of a method for moving a display unit in a vehicle.

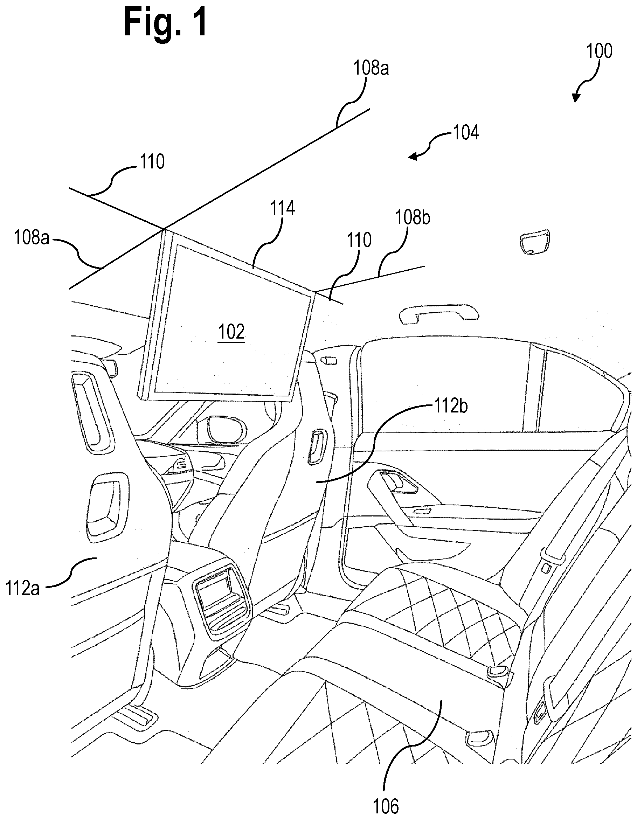

Figure 1 is a perspective view of a vehicle interior 100 with a display unit 102 and a movement unit 104. The vehicle interior 100 shown in Fig. 1 is of a passenger car. Alternatively, the vehicle may be a heavy goods vehicle or a bus.

The display unit 102 is suspended from a ceiling of the vehicle interior 100. Thus, the display unit 102 is generally arranged in the greenhouse of the vehicle interior 100. In the particular, in Fig. 1 the display unit 102 is in a neutral position, in which an electronic display of display unit 102 is facing a rear seat bench 106. By means of the electronic display, the display unit 102 may present visual content to passengers of the vehicle. In this neutral position of the display unit 102, passengers on the rear seat bench 106 may view this visual content.

The movement unit 104 may comprise several rails 108a, 108b, 110, to which the display unit 102 may be attached and along which the display unit 102 may be moved. For example, the rails 108a, 108b may be arranged in parallel to a longitudinal axis of the vehicle and run from a front to a rear of the vehicle interior 100. The rail 110 may be arranged in parallel to a lateral axis of the vehicle and run from a left to a right side of the vehicle interior 100.

The movement unit 104 may, in particular, be configured to linearly move the display unit 102 along the rails 108a, 108b, 110. For example, the display unit 102 may be moved from the neutral position along the rails 108a, 108b towards the front of the vehicle interior 100. Thus, the display unit 102 may be moved between a set of front seats 112a, 112b from the neutral position into a direction towards the front of the interior 100 and into a corresponding front position. In this front position, passengers seated on the front seats 112a, 112b may view visual content presented by the display unit 102. Thus, the display unit 102 is preferably less wide than the interior 100 in its lateral dimension.

Further, the display unit 102 may be moved along the rail 110 to the left side and the right side of the interior 100 by means of the movement unit 104. In particular, the display unit 102 may be moved from the neutral position into a left position and a right position along the rail 110. In the left position, the display unit 102 is arranged to be preferably viewed from a left rear seat of the rear seat bench 106. In the right position, the display unit 102 is arranged to be preferably viewed from a right rear sear of the rear seat bench 106.

Thus, by means of the movement unit 104, the display unit 102 can be moved into various positions within the interior 100, each position may correspond to a preferred viewing position for one or some of the seats 106, 112a, 112b of the vehicle interior 100. In particular, the movement unit 104 may be configured to move the display unit 102 at least along two perpendicular directions. Thus, by means of the movement unit 104 the display unit 102 can be flexibly positioned in the interior 100.

In addition, the movement unit 104 may be configured to rotate the display unit 102, for example, to align the display unit 102 with the ceiling of the interior 100, for example, for stowing the display unit 102. In particular, the display unit 102 may be attached to the movement unit 104 at or along an upper edge 114 of the display unit 102.

In particular, the movement unit 104 may comprise at least one electric drive configured to move the display unit 102 along the rails 108a, 108b, 110. Further the at least one electric drive may be configured to rotate the display unit 102.

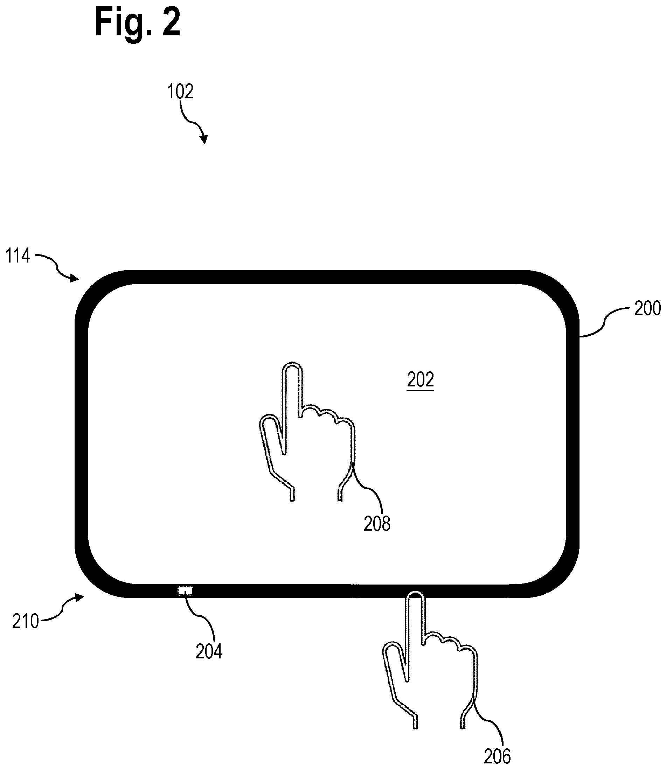

Figure 2 is a schematic view of the display unit 102. The display unit 102 may have a frame 200, which surrounds a display 202 configured to visualise content. For example, the display 202 may be a touchscreen. The display unit 102 may further comprise an inertial sensor 204, which is configured to determine a motion of the display unit 102.

In particular, by means of the inertial sensor 204 the motion of the display unit 102 as a result of a tap gesture performed on the display unit 102 may be determined. This tap gesture may be performed by a passenger of the vehicle interior 100, for example, by tapping the display with a hand 206.

The inertial sensor 204 may comprise an accelerometer and/or a gyroscope. Thus, the inertial sensor 204 may determine a linear acceleration of the display unit 102 along one or more axes. In addition, the inertial sensor 204 may determine an angular velocity, and based on that an angular acceleration, around the one or more axes.

For example, the inertial sensor 204 may determine the motion of the display unit 102 as a motion of the display unit 102 along and around the one or more axes. In particular, the inertial sensor 204 may determine the motion of the display unit 102 as values of acceleration of the display unit 102 along and/or around the one or more axes over time.

The determined motion of the display unit 102 caused by the tap gesture hand 206 may trigger the movement unit 104 to move the display unit 102 along the rails 108a, 108b, 110.

In particular, the determined motion of the display unit 102 may be compared to a set of tap gesture motions. Each of the tap gesture motions of the set, accelerations of the display unit 102 may be previously determined. Thus, each of the tap gesture motions corresponds to known acceleration values of the display unit 102 in response to a different tap gesture performed on the display unit 102.

Each of the tap gesture motions of the set may correspond to a direction the display unit 102 is to be moved in by means of the movement unit 104. Thus, the determined motion of the display unit 102 may be continuously monitored for the tap gesture motions, and in case the determined motion of the display unit 102 can be matched to one of the tap gesture motions, the display unit 102 is moved into the corresponding direction by means of the movement unit 104.

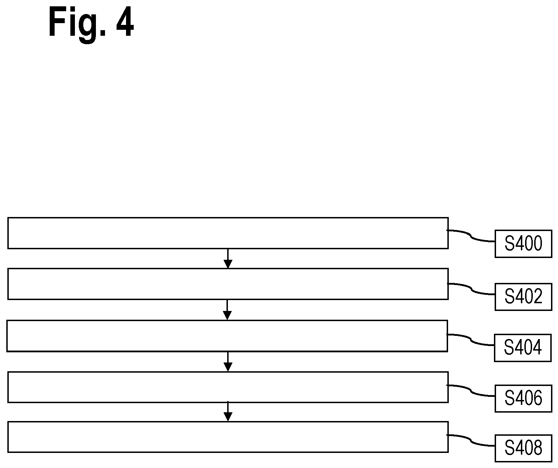

In a specific example, the set of tap gesture motions may comprise a single tap and a double tap. The single tap may correspond to moving the display unit 102 to the left side and the double tap may correspond to moving the display unit 102 to the right side. In case the determined motion of the display unit 102 can be matched to one of the tap gesture motions, the display unit 102 is moved in the respective corresponding direction. For example, in case the determined motions of the display unit 102 is in response to a double tap, the movement unit 104 is directed to move the display unit 102 along the rail 110 to the right side. This is further discussed below with reference to Fig. 4.

In a further specific example, the tap gestures and respective tap gesture motions may be configured by a user. In particular, mapping of particular tap gestures to their corresponding directions may be configured by the user. For example, the user may select that a double tap on the display unit 102 directs the movement unit 104 to move the display unit to the left position or into the right position.

The touchscreen 202 of the display unit 102 may be operated by touch gestures, for example, by a passenger of the interior 100 touching the display 202 with a hand 208.

In order to distinguish between motion of the display unit 102 due to a touch gesture by the hand 208 and a tap gesture by the hand 206, the tap gesture motions may have unique patterns. For example, the pattern of each tap gesture motion may be due to a unique number of taps, a different rhythm of taps, or taps of different intensity. Thus, each tap gesture motion may be the result of a different pattern of taps on the display unit 102.

In addition or alternatively, the tap gesture motions may differ in the specified part of the display unit 102 that is tapped to cause the specific tap gesture motion. In particular, the specified parts of the display unit 102 may not be an area of the touchscreen 202 used for touch gestures by the hand 208. For example, tapping the frame 200 of the display unit 102 at the upper edge 114, which is attached to the movement unit 104, may cause a different tap gesture motion of the display unit 102 than tapping the frame 200 at a lower edge 210, which is not attached to the movement unit 104. In particular, this assumes that the inertial sensor 204 remains at the same location within the display unit 102. Preferably, the inertial sensor 204 is arranged in a part of the display unit 102 that is not attached to the movement unit 104, such as the lower edge 210. Additionally, the inertial sensor 204 may be arranged at an asymmetric position along the lower edge 210. This enables the inertial sensor 204 to move in response to the tap gestures and that the inertial sensor 204 moves in a distinguishable manner in response to different tap gestures.

The display unit 102 may additionally have several inertial sensors 204. By providing several inertial sensors 204 the motion of the display unit 102 may be more accurately determined and motions of the display unit 102 in response to different taps may be more accurately distinguished, in particular when comparing the determined motion of the display unit 102 to the tap gesture motions.

In order to compensate for a motion of the vehicle, for example due to driving the vehicle, the motion of the vehicle may be determined by a further inertial sensor of the vehicle. Based on the motion of the vehicle a corrected determined motion of the display unit 102 may be generated that removes the influence of the motion of the vehicle from the determined motion of the display unit 102.

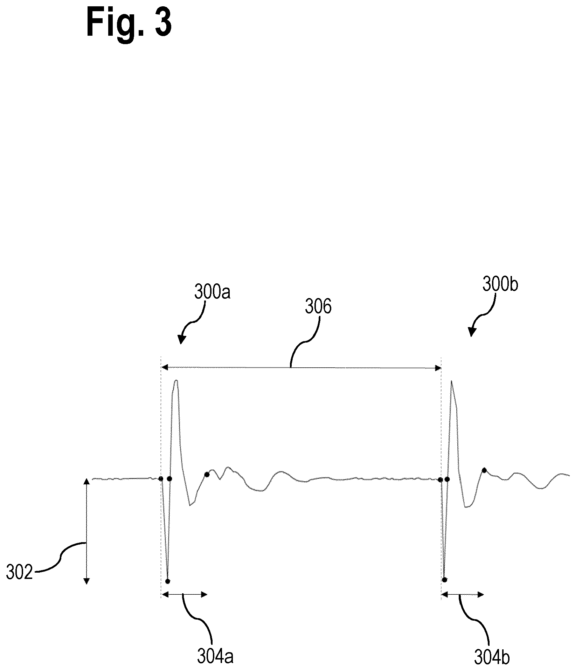

Figure 3 is a schematic view of an acceleration pattern of a tap gesture motion or a motion of the display unit 102 determined by means of the inertial sensor 204. The acceleration pattern shows values of acceleration over time. In particular, the acceleration pattern may be acceleration values over time determined by means of the inertial sensor 204.

The acceleration pattern shows acceleration due to two taps 300a, 300b. For example, the acceleration pattern may be characterised, and therefore distinguished from other patterns, by a magnitude 302 of the acceleration, by a duration 304a, 304b of the taps 300a, 300b, and by an interval 306 of the taps 300a, 300b.

Figure 4 is a flow diagram of a method for moving the display unit 102 in a vehicle, in particular the vehicle interior 100. The method starts in step S400.

In step S402, the motion of the display unit 102 is determined, in particular by means of the inertial sensor 204. The motion of the display unit 102 may be determined continuously over time.

In step S404, the determined motion of the display unit 102 is compared to the set of tap gesture motions. For example, the determined motion of the display unit 102 over a particular period of time, as exemplified by the acceleration pattern of Fig. 4, may be compared to the tap gesture motions. The tap gesture motions may be previously determined motions of the display unit 102 in response to a particular tap gesture. For example, each tap gesture motion may be unique, in particular, it may be based on a unique tap gesture.

For example, there may be a first tap gesture (e.g. double tap) to move the display unit 102 in a direction towards the front of the interior 100, in particular to the front position. There may be a second tap gesture (e.g. triple tap), different to the first gesture, to move the display unit 102 in a direction towards the left side of the interior 100, in particular to the left position. Additionally, different gestures may be provided for further directions or positions.

Alternatively or in addition, the first tap gesture may differ from the second tap gesture by the specified area of the display unit 102 that is tapped. For example, the first tap gesture may include tapping the lower edge 210 of the display unit 102, whereas the second tap gesture may include tapping a left edge of the display unit 102. Thus in this case, tapping the lower edge 210 may direct the movement unit 104 to move the display unit to the front position and tapping the left edge may direct the movement unit 104 to move the display unit 102 to the left position. Alternatively, the movement unit 104 may be directed to move the display unit 102 to the right position.

Thus, each tap gesture and its respective tap gesture motion may correspond to a different direction or position the display unit 102 may be moved into by means of the movement unit 104.

In step S406, the movement unit 104 is directed to move the display unit 102, when, in particular if, the determined motion of the display unit 102 is matched to one of the tap gesture motions of the set of tap gesture motions. In particular, this matching is based on the comparison of step S404.

For example, the determined motion of the display unit 102 may be matched to a particular one of the tap gesture motions, if their respective acceleration patterns are identical. Alternatively, the determined motion of the display unit 102 may be matched to a particular tap gesture motion in case they are sufficiently similar.

In particular, the movement unit 104 is directed to move the display unit 102 in the direction that the matched tap gesture motion corresponds to. For example, in case the determined motion of the display unit 102 is matched to the first tap gesture motion, the display unit 102 may be moved towards the front of the interior 100 or the front position by means of the movement unit 104.

Optionally, the direction the movement unit 104 may be directed to move the display unit 102 into may depended on the current position of the display unit 102. In particular, in this case a particular tap gesture motion may correspond to more than one direction, in which the movement unit 104 may be directed to move the display unit 102 into. For example, in case the display unit 102 is in a current stowed position, in which it is aligned with the ceiling of the interior 100, a particular tap gesture motion may direct the movement unit 104 to move the display unit 102 into a viewing position, for example, by rotating the display unit 102. The same particular tap gesture motion may direct the movement unit 104 to move the display unit 102 back into the stowing position, in particular, only in case the display unit 102 is not already in the stowing position. Thus, in particular in steps S406, the current state or position of the display unit 102 may be determined and the movement unit 104 may be directed to move the display unit, when the current position of the display unit 102 is matched to a specific position of the display unit 102.

When the determined motion of the display unit 102 is matched to one of the tap gesture motions the method ends in step S408 after the movement of the display unit 102 is finished. Otherwise, the method immediately ends in step S408.

In particular, the display unit 102 and the movement unit 104 may be part of a system configured to carry out the method for moving the display unit 102. Additionally, the system may comprise a control unit, for example, to carry out the steps of the method. In particular, the control unit may be configured to store the tap gesture motions, to which the determined motion of the display unit 102 may be compared.

### List of Reference Signs:

100 Vehicle interior
102 Display unit
104 Movement unit
106 Rear seat bench
108a, 108b Rails of movement unit along longitudinal axis
110 Rails of movement unit along lateral axis
112a Left front seat
112b Right front seat
114 Upper edge of display unit
200 Frame of display unit
202 Display
204 Inertial sensor
206, 208 Hand
210 Lower edge of display unit
300a, 300b Taps on acceleration patter
302 Magnitude of acceleration
304a, 304b Duration of taps
306 Interval between taps

## Claims

1. A method for moving a display unit (102) in a vehicle,
determining a motion of the display unit (102) by means of at least one inertial sensor (204),
comparing the determined motion of the display unit (102) to at least one gesture motion, and
directing a movement unit (104) to move the display unit (102), when the determined motion of the display unit (102) matches the at least one gesture motion.

2. The method according to claim 1, wherein the display unit (102) is moveable along a plurality of directions by means of the movement unit (104).

3. The method according to one of the preceding claims, wherein the determined motion of the display unit (102) is compared to a set of gesture motions and the movement unit (104) is directed to move the display unit (102), when the determined motion matches one of the gesture motions of the set of gesture motions.

4. The method according to claims 2 and 3, wherein the movement unit (104) is directed to move the display unit (102) into one of the directions of the plurality of directions, when the determined motion of the display unit (102) matches a corresponding one of the gesture motions of the set of gesture motions.

5. The method according to one of the preceding claims 3 to 4, wherein the movement unit (104) is directed to move the display unit (102) for a predetermined distance, when the determined motion of the display unit (102) matches a corresponding one of the gesture motions of the set of gesture motions.

6. The method according to one of the preceding claims 3 to 5, wherein the gesture motions of the set of gesture motions are distinguishable from each other.

7. The method according to one of the preceding claims, wherein the at least one gesture motion comprises a motion pattern.

8. The method according to one of the preceding claims, wherein the at least one gesture motion corresponds to a motion of the display unit (102) when tapped at a specified part of the display unit (102).

9. The method according to one of the preceding claims, wherein the motion of the display unit (102) is determined by means of a plurality of inertial sensors.

10. The method according to one of the preceding claims, wherein the at least one inertial sensor comprises at least one of an accelerometer and a gyroscope.

11. A system for moving a display unit in a vehicle, the system comprising means configured to carry out the method according to one of the preceding claims 1 to 10.

12. The system according to claim 11, comprising:
a display unit (102) comprising at least one inertial sensor (204) configured to determine a motion of the display unit (102), and
a movement unit (104) configured to move the display unit (102) based on the determined motion of the display unit (102).
